# EUROPÄISCHE PATENTSCHRIFT

(11) **EP 2 259 954 B1**
(45) Veröffentlichungstag und Bekanntmachung des Hinweises auf die Patenterteilung: **31.12.2014**
(21) Anmeldenummer: 09721542.0
(22) Anmeldetag: 18.02.2009
(51) Int. Cl.: B60S 1/38

(54) **WISCHBLATT**
WIPER BLADE
RACLETTE D ESSUIE-GLACE

(30) Priorität: 17.03.2008 DE 102008000708
(43) Veröffentlichungstag der Anmeldung: 15.12.2010
(73) Patentinhaber: Robert Bosch GmbH, 70442 Stuttgart (DE)
(72) Erfinder: OP'T ROODT, Inigo, B-3500 Hasselt (BE); DE BLOCK, Peter, B-3545 Halen (BE)
(86) Internationale Anmeldenummer: PCT/EP2009/051888
(87) Internationale Veröffentlichungsnummer: WO 2009/115385

(56) Entgegenhaltungen:
- WO-A-2005/115814
- WO-A-2006/117308
- DE-A1- 4 417 713
- DE-A1-102005 052 258
- DE-U1-202004 012 109

## Beschreibung

### Stand der Technik

Die Erfindung geht von einem Wischblatt nach dem Oberbegriff des Anspruchs 1 aus.

Aus der DE 10 2005 052 258 A1 ist ein Wischblatt bekannt, bei dem zwei in Längsnuten einer Wischleiste eingebettete Federschienen an ihren Enden durch eine Brücke miteinander verbunden sind. Die Brücke besitzt Seitenteile, die parallel zu den Federschienen verlaufen und sich an diesen abstützen, während ein Mittelteil der Brücke eine Rückenleiste der Wischleiste überbrückt. In den Federschienen sind im Bereich ihrer Enden Löcher vorgesehen, durch die Teile der Seitenteile hindurchgreifen und auf der dem Mittelteil abgewandten Seite der Federschienen plastisch so verformt sind, dass die Brücke mit den Federschienen fest verbunden ist. Auf diese Weise besitzen die Federschienen während des Betriebs über ihre Länge eine konstante Distanz zueinander, sodass die Kopfleiste der Wischleiste zwischen den Federschienen nicht eingeklemmt wird, sondern sich leicht der Krümmung einer Fahrzeugscheibe anpassen kann. An der zur Mitte des Wischblatts weisenden Stirnfläche des Mittelteils der Brücke ist eine Lasche angeformt, an deren Ende mindestens eine Kralle zur Rückenleiste hin abgewinkelt ist und in montiertem Zustand in diese eingepresst ist. Dadurch ist die Wischleiste in Längsrichtung relativ zu den Federschienen fixiert.

Ein gattungsgemässes Wischblatt ist aus dem Dokument DE 20 2004 012109U bekannt.

Ferner ist aus der US 3 192 551 ein Wischblatt mit einem Anschlusselement zum gelenkigen Verbinden des Wischblatts mit einem Wischarm bekannt. Das Anschlusselement ist etwa in der Mitte eines als Federschiene ausgebildeten Tragelements mit diesem durch Nieten verbunden.

### Offenbarung der Erfindung

Nach der Erfindung weisen die Federschienen an ihren Stirnseiten kurze Schlitze auf, die in Längsrichtung der Federschienen verlaufen und in die l-förmige Winkelstücke der Brücke greifen, wobei die unteren Schenkel der Winkelstücke zur Mitte der Federschienen gerichtet sind und diese untergreifen. In vorteilhafter Weise kann eine Lasche an dem Mittelteil der Brücke angeformt sein und zum Ende der Federschienen weisen und erstreckt sich zwischen den Seitenteilen der Brücke.

Die Brücke kann mit wenig Materialaufwand als Blechbiegeteil hergestellt werden und ist einfach, insbesondere ohne Schweißverfahren und Nietverfahren, zu montieren. Dabei sind die Seitenteile gegenüber dem Mittelteil der Brücke um etwa 90 Grad abgewinkelt, sodass sie sich mit der Blechstärke auf den Federschienen abstützen, und die Schlitzbreite der Blechstärke entspricht. Dadurch, dass die Lasche mit ihren Krallen zum Ende der Federschienen weist, ergibt sich auf der entgegengesetzten Seite eine gerade Stirnfläche, mit der eine Endkappe einfach verrastet werden kann. Dies ist besonders vorteilhaft, wenn sich die Brücke in Längsrichtung nicht nur an der Rückenleiste der Wischleiste über die Krallen und die Lasche an der Rückenleiste 22 abstützt, sondern sich außerdem gemäß einer Ausgestaltung der Erfindung über Haken an den freien Enden der unteren Schenkel an den Federschienen abstützt, wobei die Haken in entsprechende Bohrungen der Federschienen in montiertem Zustand eingreifen. Dabei kann es zweckmäßig sein, dass die Seitenteile an den Seiten, die den Haken zugewandt sind, Aussparungen aufweisen, in die die Haken in montiertem Zustand eintauchen. Dadurch wird eine sehr stabile formschlüssige Verbindung erzielt.

Gemäß einer Ausgestaltung der Erfindung verlaufen die Seitenteile der Brücke mit ihren breiten Seiten parallel zu den Federschienen. An ihren freien Enden sind l-förmige Winkelstücke angeformt, deren untere Schenkel die Enden der Federschienen von den Stirnseiten untergreifen, wobei Erhebungen an den den Federschienen zugewandten Seiten der unteren Schenkel und/oder der Seitenteile im montierten Zustand in Bohrungen der Federschienen eingreifen. Je nach Anwendungsfall kann es ausreichen, dass nur an den unteren Schenkeln oder den Seitenteilen Erhebungen vorgesehen sind. Bei starker Belastung der formschlüssigen Verbindung ist es jedoch zweckmäßig, an beiden Teilen Erhebungen anzuordnen. Auch hierbei ist es möglich, dass die Endkappe sich an der zur Mitte weisenden Stirnseite der Brücke verrastet. Um jedoch die Fixierung der Brücke weit gehend unabhängig von der Fixierung der Endkappe zu gestalten, kann es vorteilhaft sein, dass die Federschienen an ihren äußeren Längsseiten Aussparungen aufweisen, mit denen die Endkappe im montierten Zustand verrastet.

Gemäß einer weiteren nicht erfindungsgemässen Ausgestaltung der Erfindung sind an den parallel zu den Federschienen verlaufenden breiten Seiten der Seitenteile an ihren Längsseiten Klauen angeformt, die die äußeren Längsseiten der Federschienen umgreifen. Im Bereich der Klauen sind an den den Federschienen zugewandten Seiten der Seitenteile und/oder der Klauen Erhebungen vorgesehen, die in Bohrungen der Federschienen eingreifen. Auch hierbei gilt im Wesentlichen das zum vorhergesehenen Ausführungsbeispiel Gesagte. Die Seitenteile mit ihren Klauen können in ihrer Länge den Erfordernissen des Anwendungsfalls angepasst werden. Im Allgemeinen können sie kürzer gehalten werden als beim vorhergehenden Ausführungsbeispiel.

Um die Distanz zwischen den Federschienen im Betrieb über die gesamte Länge des Wischblatts möglichst konstant zu halten, ist es vorteilhaft, dass ein Anschlusselement zum gelenkigen Verbinden des Wischblatts mit einem Wischarm seitliche Krallen besitzt, die im montierten Zustand mit ihren unteren Schenkeln die Federschienen von ihren äußeren Längsseiten untergreifen. Erhebungen an den den Federschienen zugewandten Seiten der unteren Schenkel und/oder der Seitenteile des Anschlusselements greifen in montiertem Zustand in Vertiefungen oder Aussparungen der Federschienen ein. Dadurch wird das Anschlusselement einerseits in Längsrichtung relativ zu den Federschienen fixiert, andererseits werden die Federschienen durch das Anschlusselement auf Distanz gehalten.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht einer Wischleiste mit Federschienen und einer Brücke während der Montage,
- Fig. 2: eine vergrößerte perspektivische Ansicht einer Brücke nach Fig. 1,
- Fig. 3: eine perspektivische Teilansicht eines Wischblatts mit einem Spoiler und einer Endkappe während der Montage,
- Fig. 4: eine Variante zur Fig. 1,
- Fig. 5: eine vergrößerte perspektivische Ansicht einer Brücke nach Fig. 4,
- Fig. 6: eine Variante zu Fig. 5,
- Fig. 7: eine perspektivische Teilansicht eines Wischblatts mit einem Spoiler und einer Endkappe während der Montage,
- Fig. 8: eine nicht erfindungsgemässe Variante zu Fig. 1,
- Fig. 9: eine vergrößerte Ansicht einer Brücke nach Fig. 8 in Montagerichtung,
- Fig. 10: eine Ansicht eines Anschlusselements in Montagerichtung gemäss einer nicht erfindungsgemässen Ausführung nach Fig. 11,
- Fig. 11: eine perspektivische Ansicht eines Anschlusselements während der Montage in Längsrichtung der Federschienen gemäss einer nicht erfindungsgemässen Ausführung und
- Fig. 12: eine perspektivische Ansicht eines Anschlusselements während der Montage quer zur Längsrichtung der Federschienen gemäss einer nicht erfindungsgemässen Ausführung.

### Ausführungsformen der Erfindung

Ein wesentlicher Bestandteil eines Wischblatts 10 ist seine Wischleiste 12, die mit einer Wischlippe 14 während einer Wischbewegung über eine nicht dargestellte Fahrzeugscheibe gleitet. Die Wischlippe 14 ist über einen Kippsteg 16 mit einer Kopfleiste 18 verbunden. Diese besitzt zu beiden Seiten Längsnuten 20, die nach oben durch eine Rückenleiste 22 der Kopfleiste 18 begrenzt werden. In die Längsnuten 20 sind als federelastisches Tragelement Federschienen 24 eingesetzt, die ein Stück weit aus den Längsnuten vorstehen. Auf diesem Teil der Federschienen 24 sind ein Spoiler 48 und Endkappen 50 geführt.

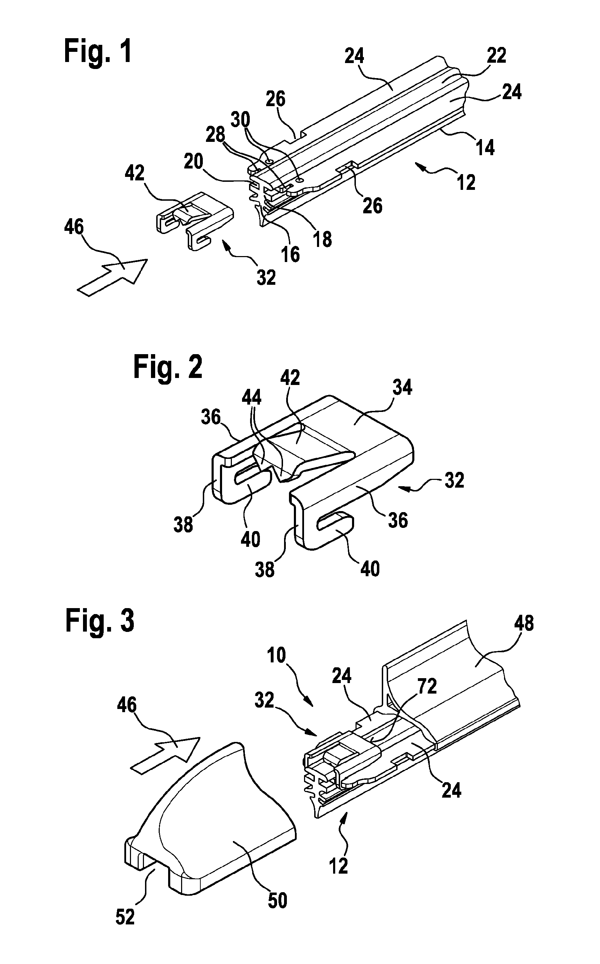

Die Federschienen 24 sind bei dem Ausführungsbeispiel nach Fig. 1 bis 5 durch eine Brücke 32 miteinander verbunden. Diese wird durch Stanzen und Biegen aus einer Blechtafel hergestellt, wobei von einem Mittelteil 34 zwei Seitenteile 36 etwa rechtwinklig abgewinkelt werden. Zwischen den Seitenteilen 36 ist eine Lasche 42 freigestanzt. Sie weist mit ihrem freien Ende, an dem zwei Krallen 44 angeformt sind, zum Ende des Wischblatts 10. Am gleichen Ende besitzen die Seitenteile 36 Winkelstücke 38, die die Federschienen 24 kreuzen, und in kurze Schlitze 28 an den Stirnseiten der Federschienen 24 passen. Bei der Montage wird die Brücke 32 in Montagerichtung 46 in Längsrichtung der Wischleiste 12 auf die Federschienen 24 geschoben, wobei die Winkelstücke 38 in die Schlitze 28 gleiten. Dabei untergreifen untere Schenkel 40 der Winkelstücke 38 die Federschienen 24 auf der der Wischlippe 14 zugewandten Seite. Bei der Montage ist die Lasche 42 mit ihren Krallen 44 zunächst noch hochgebogen. Sie wird am Ende der Montage gegen die Rückenleiste 22 gepresst, wobei die Krallen 44 in die Rückenleiste 22 dringen. Damit sind die Federschienen 24 relativ zur Wischleiste 12 fixiert.

Die Brücke 32 hält die Federschienen 24 auf einer vorgegebenen Distanz, sodass sich die Federschienen 24 in den Längsnuten 20 mit geringer Reibung bewegen können, um sich den Krümmungen einer Fahrzeugscheibe besser anpassen zu können. Wenn die Federschienen 24 mit der Brücke 32 montiert sind, wird der Spoiler 48 auf die Federschienen 24 gesetzt und abschlieβend die Endkappe 50 in Montagerichtung 46 auf die Federschienen 24 geschoben. Die Endkappe 50 verrastet mit einem nicht sichtbaren Rasthaken, entweder an einer zur Mitte des Wischblatts 10 weisenden Stirnfläche 72 der Brücken 32, 54, 62, 76 oder an Aussparungen 26 an den äußeren Längskanten der Federschienen 24. Die Endkappe 50 besitzt an ihrer äußeren Stirnwand eine Aussparung 52 für die Kopfleiste 18 der Wischleiste 12, die in montiertem Zustand bündig mit der Außenkontur der Endkappe 50 abschließt.

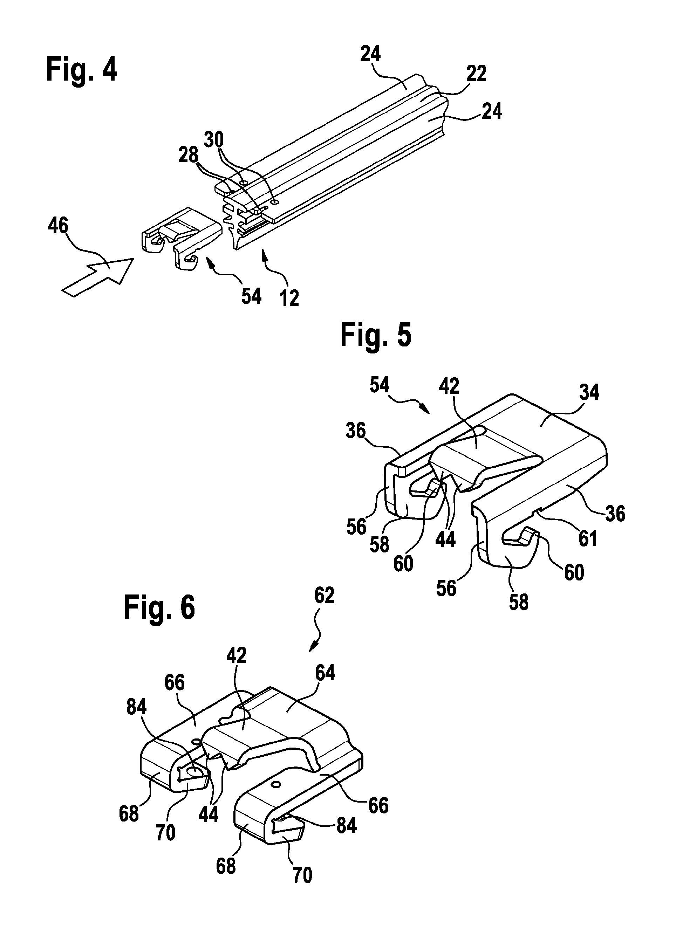

Die Brücke 54 nach dem Ausführungsbeispiel nach Fig. 5 unterscheidet sich durch die Winkelstücke 56 an den Seitenteilen 36 von der Brücke 32 nach Fig. 2. Die Winkelstücke 56 besitzen untere Schenkel 58, die an ihren freien Enden Haken 60 aufweisen, die zu den Seitenteilen 36 hin abgewinkelt sind. Bei der Montage sind die unteren Schenkel 58 ein wenig aufgebogen, sodass die Brücke 32 auf die Federschiene 24 und die Winkelstücke 56 in die Schlitze 28 gleiten können. Hat die Brücke 32 ihre Endposition erreicht, werden die unteren Schenkel 58 gegen die Seitenteile 36 gedrückt, wobei die Haken 60 in Bohrungen 30 der Federschienen 24 eingreifen. Dabei ist es zweckmäßig, dass die Haken 60 in Aussparungen 61 an der gegenüberliegenden Seite der Seitenteile 36 eintauchen, wodurch eine sichere stabile Formschlussverbindung erreicht wird.

Die Brücke 62 nach dem Ausführungsbeispiel nach Fig. 6 unterscheidet sich von der Brücke 54 nach Fig. 5 dadurch, dass ihr Mittelteil 64 gegenüber den Seitenteilen 66 gekröpft verläuft, sodass die Seitenteile 66 mit ihren flachen Seiten parallel zu den Federschienen 24 verlaufen. Es ist daher nicht möglich, dass die an den Enden angeformten Winkelstücke 68 in die Schlitze 28 der Federschienen eingreifen. Sie umfassen vielmehr die Federschienen 24 von den Stirnseiten, wobei die unteren Schenkel 70 der Winkelstücke 68 die Federschienen 24 untergreifen und mit Erhebungen 84 im montierten Zustand in die Bohrungen 30 der Federschienen 24 eingreifen. Dabei ist es möglich, dass die Erhebungen 84 sich an den unteren Schenkeln 70 und/oder an den Seitenteilen 66 befinden.

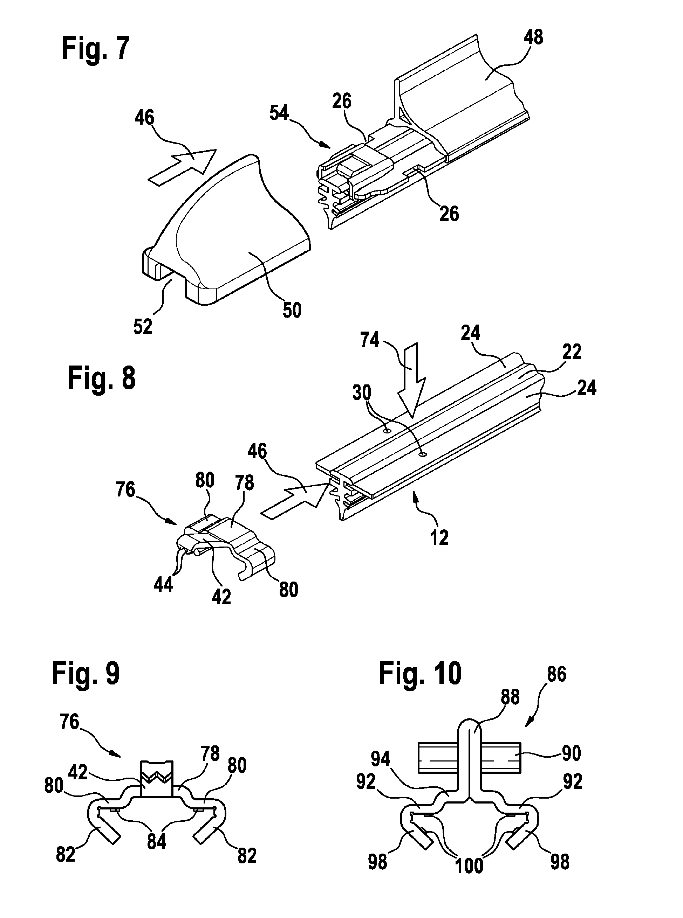

Bei dem nicht erfindungsgemässen Ausführungsbeispiel nach Fig. 8 und 9 besitzt die Brücke 76 ein Mittelteil 78, zu dem die Seitenteile 80 gekröpft verlaufen und sich an den oberen Seiten der Federschienen 24 abstützen. An die Seitenteile 80 schließen sich Klauen 82 an, die während der Montage aufgebogen sind, sodass sie in Montagerichtung 46 über die Federschienen 24 geschoben werden können. An den Seiten der Seitenteile 80, die den Federschienen 24 zugewandt sind, befinden sich Erhebungen 84, die in die Bohrungen 30 der Federschienen 24 passen. Sie werden in Montagerichtung 74 quer zu den Federschienen 24 in die Bohrungen 30 eingesetzt, worauf die Klauen 82 gegen die Unterseiten der Federschienen 24 gedrückt werden, sodass die Brücke 76 in Längsrichtung gegenüber den Federschienen 24 fixiert ist und gleichzeitig diese auf Distanz hält. Wie bei dem vorhergehenden Ausführungsbeispiel nach Fig. 6 können die Erhebungen 84 an den Seitenteilen 80 und/oder den Klauen 82 angeordnet sein.

Die nicht erfindungsgemässe Ausführungen der Fig. 10 bis 12 zeigen ein Anschlusselement 86, dessen Längssteg 88 eine Lagerachse 90 trägt. An den Längsstegen 88 schließen sich über ein Mittelteil 94 mit Seitenteilen 92 Krallen 96 an, deren untere Schenkel 98 die Federschienen 24 in montiertem Zustand von unten umfassen. Während der Montage können die unteren Schenkel 98 mit den Seitenteilen 92 einen spitzen Winkel oder einen stumpfen Winkel einschließen. Bei einem spitzen Winkel wird das Anschlusselement 86 in Montagerichtung 46 in Längsrichtung der Federschienen 24 auf diese geschoben, bis sie etwa im mittleren Bereich der Federschienen 24 Vertiefungen oder Aussparungen 102 erreichen. In diese greifen Erhebungen 100, die sich an den Innenseiten der Seitenteile 92 und/oder der Schenkel 98 befinden.

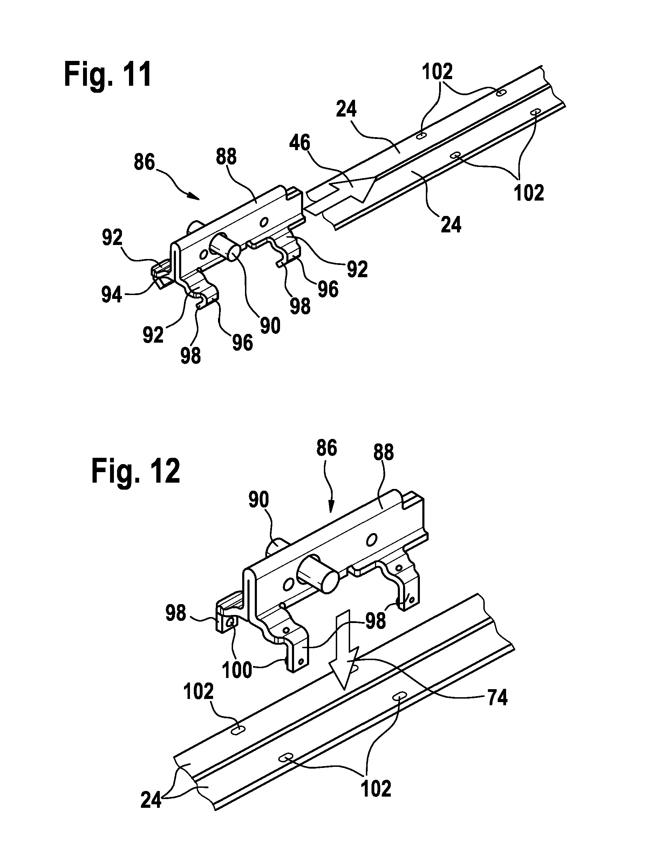

Wenn die unteren Schenkel 98 mit den Seitenteilen 92 einen Winkel gleich oder größer 90 Grad bilden, kann das Anschlusselement 86 in einer Montagerichtung 74 quer zur Längsrichtung der Federschienen 24 montiert werden, wobei die unteren Schenkel 98 am Ende der Montage um die äußeren Längsseiten der Federschienen 24 gebogen werden (Fig. 12).

## Patentansprüche

1. Wischblatt (10) mit einer Wischleiste (12), in deren seitliche Längsnuten (20) als federelastisches Tragelement zwei Federschienen (24) eingesetzt sind, wobei die Enden der Federschienen (24) durch eine Brücke (32, 54, 62, 76) miteinander verbunden sind, indem Seitenteile (36, 66, 80) der Brücke (32, 54, 62, 76) sich an der oberen Seite der Federschiene (24) abstützen und in Aussparungen (28, 30) der Federschienen (24) eingreifen, während ein Mittelteil (34, 64, 78) der Brücke (32, 54,62, 76) eine die Längsnuten (20) nach oben begrenzende Rückenleiste (22) der Wischleiste (12) überbrückt, **dadurch gekennzeichnet, dass** die Federschienen (24) an ihren Stirnseiten kurze Schlitze (28) aufweisen, die in Längsrichtung der Federschienen (24) verlaufen und in die I-förmige Winkelstücke (38, 56) der Brücke (32, 54) greifen, wobei untere Schenkel (40, 58) der Winkelstücke (38, 56) zur Mitte der Federschienen (24) gerichtet sind und diese untergreifen.

2. Wischblatt (10) nach Anspruch 1, **dadurch gekennzeichnet, dass** die unteren Schenkel (58) an ihren Enden Haken (60) besitzen, die zu den Federschienen (24) abgewinkelt sind und im montierten Zustand in Bohrungen (30) der Federschienen (24) eingreifen.

3. Wischblatt (10) nach Anspruch 2, **dadurch gekennzeichnet, dass** die Seitenteile (54) der Brücke (32) an den den Haken (60) zugewandten Seiten Aussparungen (61) haben, in die die Haken (60) im montierten Zustand eintauchen.

4. Wischblatt (10) nach einem der vorhergehenden Ansprüche, **dadurch gekennzeichnet, dass** die Federschienen (24) an ihren äußeren Längsseiten auf der zur Mitte des Wischblatts (10) liegenden Seite der Brücke (32, 54, 62, 76) Aussparungen (26) besitzen, mit denen Endkappen (50) im montierten Zustand verrasten.

5. Wischblatt (10) nach einem der vorhergehenden Ansprüche, **dadurch gekennzeichnet, dass** Mittelteil (34, 64, 78) der Brücke (32, 54,62, 76) eine Lasche (42) aufweist, die an ihrem freien Ende mindestens eine Kralle (44) besitzt, die im montierten Zustand in die Rückenleiste (22) eindringt, wobei die Lasche (42) zum Ende der Federschienen (24) weist und sich zwischen den Seitenteilen (36) der Brücke (32, 54) erstreckt.

## Claims

1. Wiper blade (10) with a wiper strip (12), into the lateral longitudinal grooves (20) of which two spring rails (24) are inserted as a resiliently elastic supporting element, wherein the ends of the spring rails (24) are connected to each other by a bridge (32, 54, 62, 76) by side parts (36, 66, 80) of the bridge (32, 54, 62, 76) being supported on the upper side of the spring rail (24) and engaging in cutouts (28, 30) in the spring rails (24) while a central part (34, 64, 78) of the bridge (32, 54, 62, 76) spans a back strip (22) of the wiper strip (12), the back strip upwardly bounding the longitudinal grooves (20), **characterized in that** the end sides of the spring rails (24) have short slots (28) which run in the longitudinal direction of the spring rails (24) and into which l-shaped angle pieces (38, 56) of the bridge (32, 54) engage, while lower limbs (40, 58) of the angle pieces (38, 56) are directed toward the center of the spring rails (24) and grip the latter from below.

2. Wiper blade (10) according to Claim 1, **characterized in that** the ends of the lower limbs (58) have hooks (60) which are angled with respect to the spring rails (24) and, in the fitted state, engage in bores (30) in the spring rails (24).

3. Wiper blade (10) according to Claim 2, **characterized in that** the side parts (54) of the bridge (32) have cutouts (61) on the sides facing the hooks (60), into which the hooks (60) enter in the fitted state.

4. Wiper blade (10) according to one of the preceding claims, **characterized in that** the outer longitudinal sides of the spring rails (24) have, on that side of the bridge (32, 54, 62, 76) which is located toward the center of the wiper blade (10), cutouts (26) to which end caps (50) latch in the fitted state.

5. Wiper blade (10) according to one of the preceding claims, **characterized in that** the central part (34, 64, 78) of the bridge (32, 54, 62, 76) has a tab (42) which, at the free end thereof, has at least one claw (44) which, in the fitted state, penetrates the back strip (22), the tab (42) facing the end of the spring rails (24) and extending between the side parts (36) of the bridge (32, 54).

## Revendications

1. Balai d'essuie-glace (10) comprenant une raclette de balai d'essuie-glace (12) dans les rainures longitudinales latérales (20) de laquelle sont insérés, en tant qu'élément de support élastique, deux rails élastiques (24), les extrémités des rails élastiques (24) étant reliées l'une à l'autre par un pont (32, 54, 62, 76), par le fait que des parties latérales (36, 66, 80) du pont (32, 54, 62, 76) s'appuient sur le côté supérieur du rail élastique (24) et viennent en prise dans des évidements (28, 30) des rails élastiques (24), tandis qu'une partie centrale (34, 64, 78) du pont (32, 54, 62, 76) enjambe une barrette dorsale (22) de la raclette de balai d'essuie-glace (12) limitant vers le haut les rainures longitudinales (20), **caractérisé en ce que** les rails élastiques (24) comprennent, au niveau de leurs côtés frontaux, de courtes fentes (28) qui s'étendent dans la direction longitudinale des rails élastiques (24) et dans lesquelles viennent en prise des pièces coudées en forme de I (38, 56) du pont (32, 54), des branches inférieures (40, 58) des pièces coudées (38, 56) étant orientées vers le centre des rails élastiques (24) et venant en prise par le dessous avec ceux-ci.

2. Balai d'essuie-glace (10) selon la revendication 1, **caractérisé en ce que** les branches inférieures (58) présentent à leurs extrémités des crochets (60) qui sont coudés par rapport aux rails élastiques (24) et, à l'état monté, viennent en prise dans des alésages (30) des rails élastiques (24).

3. Balai d'essuie-glace (10) selon la revendication 2, **caractérisé en ce que** les parties latérales (54) du pont (32) présentent, sur les côtés tournés vers les crochets (60), des évidements (61) dans lesquels pénètrent les crochets (60) à l'état monté.

4. Balai d'essuie-glace (10) selon l'une quelconque des revendications précédentes, **caractérisé en ce que** les rails élastiques (24) présentent, sur leurs côtés longitudinaux extérieurs, du côté du pont (32, 54, 62, 76) situé vers le centre du balai d'essuie-glace (10), des évidements (26) avec lesquels s'encliquètent des capuchons d'extrémité (50) à l'état monté.

5. Balai d'essuie-glace (10) selon l'une quelconque des revendications précédentes, **caractérisé en ce que** la partie centrale (34, 64, 78) du pont (32, 54, 62, 76) comprend une languette (42) qui présente, à son extrémité libre, au moins une griffe (44) qui pénètre dans la barrette dorsale (22) à l'état monté, la languette (42) étant tournée vers l'extrémité des rails élastiques (24) et s'étendant entre les côtés latéraux (36) du pont (32, 54).
